# EUROPÄISCHE PATENTANMELDUNG

(11) **EP 1 455 126 A1**
(43) Veröffentlichungstag der Anmeldung: **08.09.2004**
(21) Anmeldenummer: 03005038.9
(22) Anmeldetag: 06.03.2003
(51) Int. Cl.: F16K 27/06

(54) **Absperrventil in Form eines Kugelhahns oder Segmentkugelventils**

(71) Anmelder: K+H Armaturen GmbH, D-75038 Oberderdingen (DE); Gentili, Gianluigi, 29023 Carpaneto (IT)
(72) Erfinder: Kunzmann, Wolf Dieter, 75038 Oberderdingen (DE); Gentili, Gianluigi, 29023 Carpenato (IT)
(74) Vertreter: WOLF & LUTZ

(57) **Zusammenfassung**

Die Erfindung betrifft ein Absperrventil in Form eines Kugelhahns oder Segmentkugelventils, bestehend aus einem mindestens eine dichtende Durchgangsbohrung (2) für die Bedienungsachse (3) aufweisenden Ringelement (1), in welchem ein eine Durchgangsöffnung (4) aufweisender, kugelförmiger Verschlußkörper (5) oder eine Segmentkugel abdichtend schwimmend gelagert ist, der/die mit der Bedienungsachse (3) verbunden ist. Das Absperrventil ist dadurch gekennzeichnet, daß das Ringelement (1) mit umlaufenden Flanschen (10) ausgebildet ist, an welchen von beiden Seiten das Absperrventil umgebende Blechteile eingesetzt und mit Schrauben od. dgl. befestigt sind.

## Beschreibung

Die Erfindung betrifft ein Absperrventil in Form eines Kugelhahns oder Segmentkugelventils. Ein derartiges Absperrventil in Form eines Kugelhahns oder Segmentkugelventils ist in der DE 199 53 083 A 1 beschrieben. Dieses Ventil besteht aus zwei Durchgangsöffnungen aufweisende Gehäusehälften mit eingesetzten Dichtungsschalen, in denen der kugelförmige Verschlußkörper mit einer Bedienungsachse schwimmend gelagert ist. Dieses Absperrventil ist dadurch gekennzeichnet, daß zwischen den beiden Gehäusehälften gegenüber diesen dichtend ein zylinderförmiges Ringelement mit mindestens einer dichtenden Durchgangsbohrung für die Bedienungsachse angeordnet ist.

Dieses vorbekannte Absperrventil weist jedoch den Nachteil auf, daß es verhältnismäßig teuer in der Herstellung ist und durch die beanspruchten, verhältnismäßig stark ausgebildeten Gehäusehälften sehr viel Material benötigt.

Der vorliegenden Erfindung liegt die Aufgabe zugrunde, das vorbekannte Absperrventil insoweit zu verbessern, als bei der Herstellung eine starke Materialeinsparung erzielt wird und das Ventil keine vollständig das Ventil umschließende Gehäusehälften benötigt.

Zur Lösung der gestellten Aufgabe wird ein Absperrventil in Form eines Kugelhahns oder Segmentkugelventils gemäß Anspruch 1 vorgeschlagen.

Mit dem Absperrventil gemäß der Erfindung wird der wesentliche Vorteil erreicht, daß infolge der nunmehr möglichen einfachen Ausbildung der Blechteile eine starke Materialeinsparung und eine wesentliche Vereinfachung bei der Herstellung des Ventils erzielt wird, da anstelle der Gehäuseteile einfache Blechteile verwendet werden, wobei die Abdichtung des Verschlußkörpers lediglich mit einfachen O-Ringen erfolgt.

Anhand der Zeichnungen soll am Beispiel einer bevorzugten Ausführungsform das Absperrventil gemäß der Erfindung näher erläutert werden.

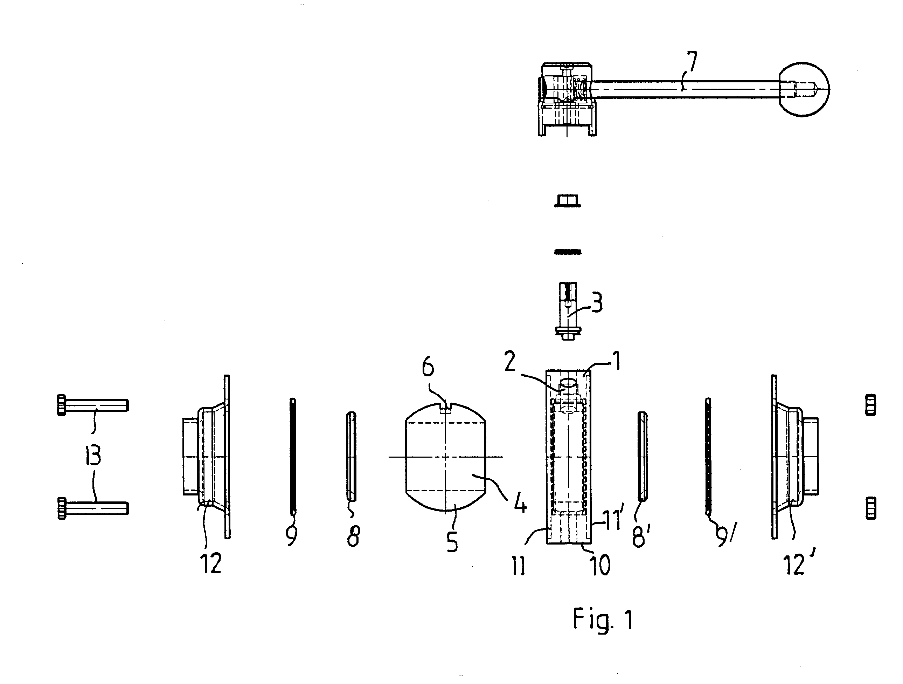

In den Zeichnungen zeigt
- Fig. 1: eine auseinandergezogene Darstellung des Absperrventils gemäß der Erfindung.
- Fig. 2: zeigt einen Schnitt durch das zusammengesetzte Absperrventil gemäß der Erfindung.
- Fig. 3: zeigt eine vergrößerte Ansicht des Kreises Z von Fig. 2.
- Fig. 4: zeigt einen Querschnitt durch das Absperrventil gemäß der Erfindung.
- Fig. 5: zeigt eine perspektivische Darstellung des Absperrventils gemäß der Erfindung.

Wie sich aus den Figuren der Zeichnungen ergibt, weist das Absperrventil als wesentlichen Träger ein Ringelement 1 auf, das eine Durchgangsbohrung 2 für eine Bedienungsachse 3 aufweist. In das Ringelement 1 ist ein mit einer Durchbohrung 4 versehener kugelförmiger Verschlußkörper 5 oder eine Segmentkugel eingesetzt, der/die an der Oberseite eine Aussparung 6 für den Einsatz der Bedienungsachse 3 aufweist. Auf die Bedienungsachse wird mittels einer Klemmvorrichtung der Handhebel 7 aufgesetzt. Anstelle eines Handhebels kann auch ein pneumatischer oder elektrischer Antrieb aufgebaut werden. An dem Verschlußkörper 5 liegt von beiden Seiten je eine Dichtung 8, 8' an. An der Oberseite, im Bereich der Bedienungsachse 3, liegen im zusammengesetzten Zustand die O-Ringe 9, 9' an.

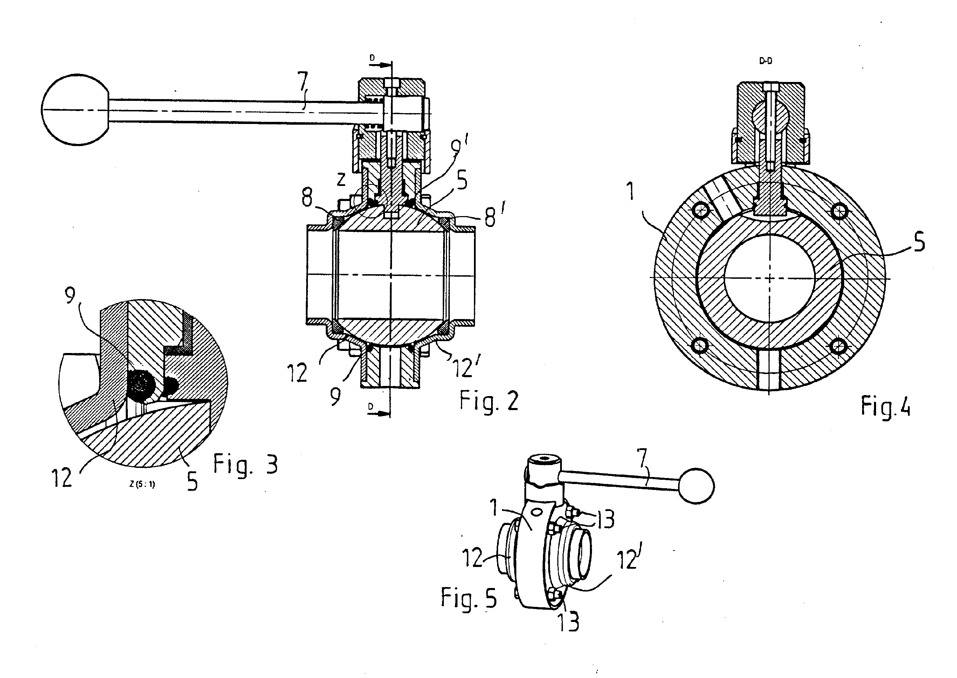

Das Ringelement 1 weist auf dem Umfang einen Flansch 10 auf, der mit zwei umlaufenden Vertiefungen 11, 11' versehen ist. In diese Vertiefungen werden beim Zusammenbau des Ventils einfache, umschließende Blechteile 12, 12' eingesetzt und mittels Schrauben 13 an dem Ringelement festgeschraubt. Die Schrauben 13 verlaufen durch die Bohrungen 14, wie in Fig. 4 dargestellt. An dem Ringelement 1 kann ferner noch ein Einlaß 15 und ein Auslaß 16 für einen Spülkanal vorgesehen sein.

## Patentansprüche

1. Absperrventil in Form eines Kugelhahns oder Segmentkugelventils mit einem mindestens eine dichtende Durchgangsbohrung (2) für die Bedienungsachse (3) aufweisenden Ringelement (1), in welchem ein eine Durchgangsöffnung (4) aufweisender, kugelförmiger Verschlußkörper (5) oder eine Segmentkugel abdichtend schwimmend gelagert ist, der/die mit der Bedienungsachse (3) verbunden ist, **dadurch gekennzeichnet, daß** das Ringelement (1) mit umlaufenden Flanschen (10) ausgebildet ist, an welchen von beiden Seiten das Absperrventil umgebende Blechteile eingesetzt und mit Schrauben od. dgl. befestigt sind.

2. Absperrventil nach Anspruch 1, **dadurch gekennzeichnet, daß** die umlaufenden Flansche des Ringelements (1) Vertiefungen (11, 11') für die Blechteile (12, 12') aufweisen.
